# EUROPÄISCHE PATENTSCHRIFT

(11) **EP 1 099 192 B1**
(45) Veröffentlichungstag und Bekanntmachung des Hinweises auf die Patenterteilung: **17.04.2002**
(21) Anmeldenummer: 99939410.9
(22) Anmeldetag: 27.07.1999
(51) Int. Cl.: G06K 19/073

(54) **GETAKTETE INTEGRIERTE HALBLEITERSCHALTUNG UND VERFAHREN ZUM BETREIBEN EINER SOLCHEN**
CLOCKED INTEGRATED SEMICONDUCTOR CIRCUIT AND METHOD FOR OPERATING THE SAME
CIRCUIT SEMI-CONDUCTEUR INTEGRE A HORLOGE ET SON MODE DE FONCTIONNEMENT

(30) Priorität: 29.07.1998 EP 98114199
(43) Veröffentlichungstag der Anmeldung: 16.05.2001
(73) Patentinhaber: Infineon Technologies AG, 81669 München (DE)
(72) Erfinder: REINER, Robert, D-85579 Neubiberg (DE); SEDLAK, Holger, D-85658 Egmating (DE)
(74) Vertreter: Epping Hermann & Fischer
(86) Internationale Anmeldenummer: EP9905391
(87) Internationale Veröffentlichungsnummer: WO0007142

(56) Entgegenhaltungen:
- PATENT ABSTRACTS OF JAPAN vol. 010, no. 101 (P-447), 17. April 1986 (1986-04-17) & JP 60 231285 A (SUWA SEIKOSHA KK), 16. November 1985 (1985-11-16)

## Beschreibung

Die Erfindung betrifft eine integrierte Halbleiterschaltung mit einer Anzahl von durch ein Taktsignal angesteuerten, sowohl parallel als auch seriell betreibbaren Schaltungseinheiten sowie Verfahren zum Betreiben solcher integrierter Halbleiterschaltungen.

Integrierte Halbleiterschaltungen dienen zumeist der Signal-bzw. Datenverarbeitung und sind auf der Basis digitaler Schaltungstechnik realisiert. Solche Digitalschaltungen benötigen meist ein Taktsignal, um synchron und gemäß einem durch die jeweilige Anwendung bestimmten Ablauf arbeiten zu können. Sehr häufig werden bestimmte Vorgänge nach definierten Protokollen abgearbeitet. Diese Protokolle benötigen eine bestimmte Anzahl von Taktsignalperioden.

Bei vielen Anwendungen wie beispielsweise bei integrierten Halbleiterschaltungen für Chipkarten wird das erforderliche Taktsignal von außen über einen Anschlußpin zugeführt. Bei sicherheitskritischen Anwendungen, das sind insbesondere Anwendungen, bei denen die zu verarbeitenden Signale Geldwerten oder Zutrittsberechtigungen entsprechen, besteht ein hohes Interesse möglicher Angreifer, Informationen über den jeweiligen Ablauf zu erlangen, um auf das Ergebnis Einfluß nehmen zu können. Um die Information zum Verarbeitungsablauf zu verschleiern, wird in JP 60 231 285 A eine Zufallszahl generiert, an Hand der die Datenabfolge in den Datenblöcken vertauscht wird. Die Informationen können aber auch aus der Dauer von einzelnen Vorgängen bzw. aus der dafür nötigen Anzahl von Taktsignalperioden gewonnen werden, insbesondere, wenn bereits Teilkenntnisse über die Art der Vorgänge vorliegen.

Integrierte Halbleiterschaltungen für Chipkarte umfassen zumeist eine Anzahl von Schaltungseinheiten, wie beispielsweise einen Prozessor, eine Coprozessor, einen nicht-flüchtigen Speicher mit zugehöriger Programmierlogik, eine Eingangs/Ausgangsschaltung, wie zum Beispiel einen UART und anderes. Im Interesse einer möglichst hohen Bearbeitungsgeschwindigkeit sollen so viele Schaltungseinheiten wie möglich gleichzeitig arbeiten, so daß in vielen Fällen versucht wird, während des Einschreibens von Daten in den nicht-flüchtigen Speicher den Prozessor eine Aufgabe ausführen zu lassen und ebenfalls gleichzeitig den Coprozessor arbeiten zu lassen, während der UART Daten von außen empfängt oder nach außen gibt.

Die ablaufenden Vorgänge nehmen aus der Versorgungsspannung hauptsächlich während der Schaltflanken des Taktsignals Energie auf, so daß durch Beobachtung bzw. Überwachung des in die integrierte Halbleiterschaltung fließenden Stroms einerseits der Zeitpunkt der Schaltflanken des Taktsignals ermittelt werden kann, soweit dieses von außen zugeführt wird, andererseits aber die Dauer von einzelnen Vorgängen ermittelt werden kann und aus einer längeren Überwachung festgestellt werden kann, wann welche Vorgänge ablaufen. Unter Umständen kann dann sogar aus der Kenntnis des Gesamtvorgangs auf die Einzelvorgänge und damit die Verarbeitungsstruktur der integrierten Halbleiterschaltung geschlossen werden.

Es ist daher die Aufgabe vorliegender Erfindung, zu verhindern, daß durch Abzählen von Stromspitzen auf die Art des ablaufenden Vorgangs geschlossen werden kann.

Die Aufgabe wird durch eine integrierte Halbleiterschaltung mit den Merkmalen gemäß Anspruch 1 gelöst. Sie wird auch durch Verfahren gemäß der Ansprüche 8 und 9 gelöst. Vorteilhafte Weiterbildungen der Erfindung sind in den Unteransprüchen angegeben.

Bei der erfindungsgemäßen Halbleiterschaltung werden also Zufallsignal-abhängig verschiedene Schaltungseinheiten mal gleichzeitig, mal hintereinander betrieben, indem ihnen ein Taktsignal zugeführt wird oder nicht. Es kann dabei auch vorkommen, daß ein Vorgang in einer ersten Schaltungseinheit unterbrochen wird, und ein anderer Vorgang in einer weiteren Schaltungseinheit beginnt oder fortgeführt wird, um dann nachfolgend oder gleichzeitig den ersten Vorgang durchzuführen. Hierdurch wird erreicht, daß ein bestimmter Vorgang bei einer Wiederholung so gut wie nie dieselbe Dauer hat, und somit auch nicht festgestellt werden kann, daß es sich um denselben Vorgang handelt.

In vorteilhafter Weiterbildung ist der das Taktsignal bereitstellende Anschluß der Ausgang eines steuerbaren Taktsignalgenerators, dessen Steuereingang mit dem Ausgang eines Zufallsignalgenerators verbunden ist, so daß der Zeitpunkt einer Schaltflanke des Taktsignals nach Maßgabe des Zufallssignals variiert.

Es ist hierbei besonders vorteilhaft, wenn die Schwankungen des Zufallsignals relativ langsam in Bezug auf die mittlere Periodendauer des Taktsignals sind, jedoch die Amplitude des Zufallsignals von Vorgang zu Vorgang so stark schwankt, daß gleiche Vorgänge mit unterschiedlicher Taktfrequenz ablaufen und somit immer unterschiedliche Dauer haben. Hierdurch wird eine Detektion der Schaltflanken des Taktsignals erheblich erschwert.

Bei dieser Ausbildung der integrierten Halbleiterschaltung ist der Zusammenhang zwischen einem extern angelegten Taktsignal und der schaltungsinternen Taktung aufgehoben. Der interne Taktsignalgenerator erzeugt aufgrund der Ansteuerung durch den Zufallsignalgenerator einen unregeimäßigen Takt, so daß die Zuordnung bestimmter Vorgänge zu bestimmten Zeitintervallen kaum möglich ist.

In einer weiteren Ausbildung der Erfindung sind in der integrierten Halbleiterschaltung zumindest zwei Taktsignalgeneratoren mit unterschiedlicher Frequenz vorhanden, wobei eine erste Anzahl von Schaltungseinheiten mit einem ersten Taktsignal und eine zweite Anzahl von Schaltungseinheiten mit einem zweiten Taktsignal betrieben werden. Gegebenenfalls können weitere Schaltungseinheiten mit weiteren Taktsignalen betrieben werden. Insbesondere bei einer Verschachtelung von Vorgängen in mit unterschiedlicher Frequenz getakteten Schaltungseinheiten erreicht man eine weitere Verzufälligung von Vorgangsdauern.

In einer besonders vorteilhaften Weiterbildung dieses Prinzips sind die einzelnen Schaltmittel als Multiplexer ausgebildet, über die jedes Taktsignal jeder Schaltungseinheit zugeführt werden kann. Die Multiplexer werden durch ein Zufallsignal oder verschiedene Zufallsignale angesteuert, so daß eine bestimmte Schaltungseinheit mit verschiedenen Taktsignalen, die außerdem auch in ihrer Frequenz zufällig schwanken können, betrieben werden kann.

In einer Ausbildung der Erfindung ist ein Taktsignalgenerator mit einem gesteuerten, insbesondere spannungsgesteuerten Oszillator gebildet.

Eine weitere Realisierung eines Taktsignalgenerators kann mit einer Phasenregelschleife erfolgen, die einen steuerbaren bzw. einstellbaren Frequenzteiler aufweist, durch den die Frequenzschwankungen in das Taktsignal eingekoppelt werden.

Der Zufallsignalgenerators kann ein Zufallszahlengenerator sein, der eine beliebige Anzahl digitaler Ausgänge aufweist, um damit den Frequenzteiler einer Phasenregelschleife direkt anzusteuern. Dem Zufallszahlengenerator kann aber auch ein D/A-Wandler nachgeschaltet sein, über den beispielsweise der Steuereingang eines Oszillators angesteuert werden kann. Üblicherweise weist ein Zufallszahlengenerator lediglich einen Ausgang auf, so daß lediglich ein Umschalten des Oszillators zwischen zwei Frequenzen erfolgt.

Es ist aber auch möglich, einem stabilen Oszillator einen Frequenzteiler nachzuschalten, der von einem Zufallszahlengenerator angesteuert wird. Prinzipiell geht es darum, ein frequenzmoduliertes Taktsignal zu erzeugen, bei dem der Modulationsgrad statistischen Schwankungen unterliegt. Günstig ist es dabei, wenn die mittlere Periodendauer des von dem Zufallsignalgenerator erzeugten Modulationssignals etwa der mittleren Dauer der in der integrierten Halbleiterschaltung ablaufenden Vorgänge ist.

In besonders vorteilhafter Weiterbildung der Erfindung ist zumindest eine der Schaltungseinheiten als Hilfsschaltungseinheit mit zwar etwa gleichem Stromverbrauch wie die anderen Schaltungseinheiten jedoch ohne für die integrierte Halbleiterschaltung wesentliche Funktion ausgebildet. Eine Zufallsignal-gesteuerte Umschaltung auf diese Hilfsschaltungseinheit vor und/oder während und/oder nach in Schaltungseinheiten der integrierten Halbleiterschaltung ablaufenden, jeweils eine definierte Anzahl von Taktsignalperioden benötigenden Vorgängen führt zu einer zufälligen Veränderung der Dauer dieser Vorgänge, ohne daß dies am Stromverbrauch erkannt werden kann.

Besonders günstig ist es, wenn während eines Vorgangs in einer Schaltungseinheit sowohl eine zufällige Umschaltung auf die Hilfsschaltungseinheit erfolgt als auch zufällig eine oder weitere Schaltungseinheiten in Betrieb genommen oder angehalten werden.

Die Erfindung wird nachfolgend anhand von Ausführungsbeispielen mit Hilfe von Figuren näher erläutert. Dabei zeigen:
- Figur 1: ein prinzipielles Blockschaltbild einer erfindungsgemäßen integrierten Halbleiterschaltung,
- Figur 2: ein weiteres prinzipielles Blockschaltbild einer erfindungsgemäßen integrierten Halbleiterschaltung
- Figur 3: eine Variante eines Taktsignalgenerators mit einem digitalen Zufallzahlengenerator,
- Figur 4: eine Variante eines Taktsignalgenerators mit einer Phasenregelschleife
- Figur 5: den zeitlichen Ablauf von Vorgängen mit einem externen Taktsignal und gemäß der Erfindung.

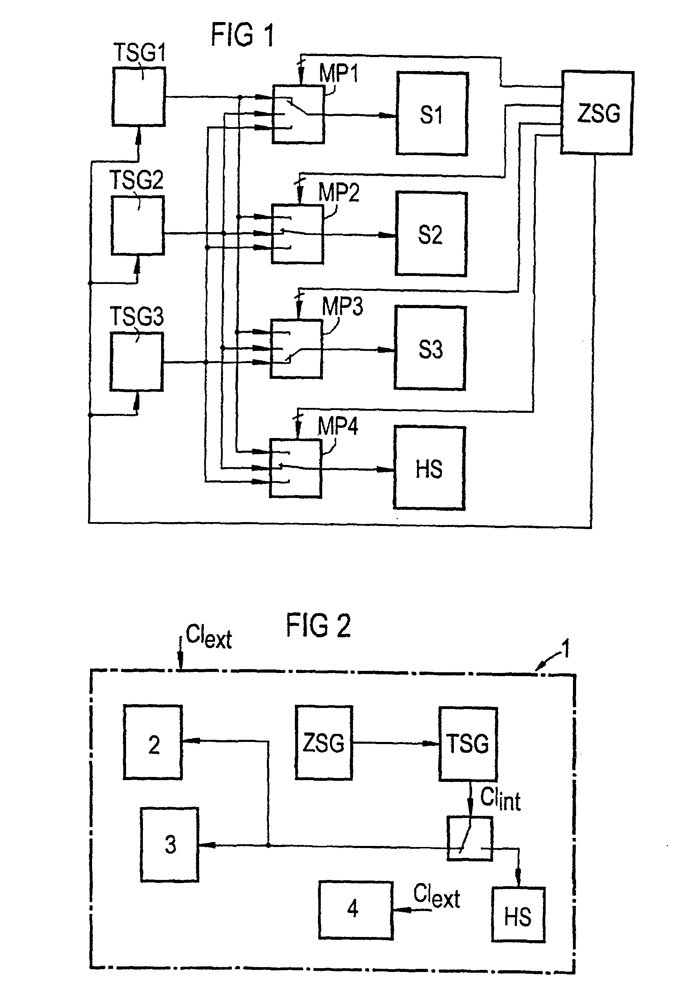

Figur 1 zeigt ein Prinzipschaltbild einer erfindungsgemäßen integrierten Halbleiterschaltung mit drei Schaltungseinheiten S1, S2 und S3. Desweiteren ist eine Hilfsschaltungseinheit HS dargestellt. Es sind drei Taktsignalgeneratoren TSG1, TSG2, TSG3 vorhanden, deren Ausgangssignale jeweils über Multiplexer MP1, MP2, MP3, MP4 den Schaltungseinheiten S1 bis S3 bzw. HS zugeführt werden können. Die Multiplexer MP1 bis MP4 werden durch Ausgangssignale eines Zufallssignalgenerators ZSG angesteuert. Ein weiteres Ausgangssignal des Zufallssignalgenerators ZSG steuert außerdem die Taktsignalgeneratoren TSG1 bis TSG3.

Mit der erfindungsgemäßen integrierten Halbleiterschaltung lassen sich also, wie durch die Prinzipdarstellung in Figur 1 angedeutet ist, unterschiedliche Schaltungseinheiten S1 bis S3 bzw. HS mit Taktsignalen unterschiedlicher Frequenz zufallsgesteuert seriell oder parallel betreiben. Insbesondere können durch Umschalten auf die Hilfsschaltungseinheiten HS während des Ablaufs eines Vorgangs in einer funktionsbehafteten Schaltungseinheit Dummy-Takte eingefügt werden, so daß der Vorgang für einen externen Beobachter scheinbar länger dauert, als er tatsächlich ist. Es ist auch möglich, kürzere Vorgänge durch paralleles Takten zweier Schaltungseinheiten in einem längeren Vorgang zu verstecken.

Figur 2 zeigt, angedeutet durch eine strichpunktierte Linie, eine integrierte Halbleiterschaltung 1, die unter anderem Schaltungen 2, 3, wie Speicher- oder Logikschaltungen, umfasst. Diese Schaltungen 2, 3 werden von einem internen Taktsignal Clᵢₙₜ getaktet. Dieses interne Taktsignal wird von einem Taktsignalgenerator TSG erzeugt. Der Taktsignalgenerator TSG weist einen Steuereingang auf, der mit dem Ausgang eines Zufallsignalgenerators ZSG verbunden ist. Der integrierten Halbleiterschaltung wird von außen ein externes Taktsignal Clₑₓₜ zugeführt, das im dargestellten Beispiel einer ebenfalls in der integrierten Halbleiterschaltung 1 enthaltenen Schaltung 4 als Taktsignal zugeführt wird. Durch die zusätzliche Verwendung des externen Taktsignals Clₑₓₜ können Vorgänge in verschiedenen Schaltungen mit unterschiedlichen Taktfrequenzen ablaufen. Dadurch wird die Zuordnung von Vorgängen zu bestimmten Zeitperioden weiter erschwert. Außerdem gibt es Schaltungseinheiten wie beispielsweise Eingangs/Ausgangsschaltungen, die mit einem externen Taktsignal getaktet werden müssen, da sie Daten von einem externen Terminal erhalten und mit diesem synchron arbeiten müssen.

Der Taktsignalgenerator TSG kann als spannungsgesteuerter Oszillator ausgebildet sein und von einem Zufallsignalgenerator ZSG mit analogem Ausgang angesteuert werden.

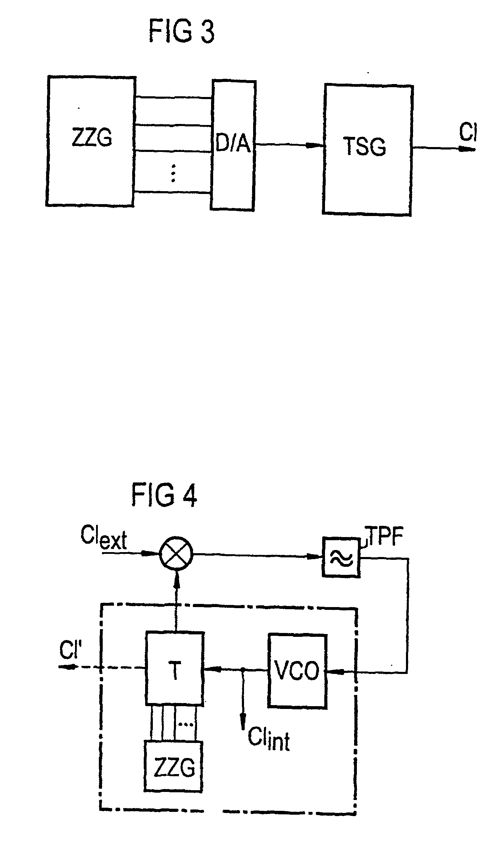

Wie Figur 3 zeigt, kann der Zufallsignalgenerator auch als Zufallszahlengenerator ZZG mit einer beliebigen Anzahl digitaler Ausgänge ausgebildet sein. Diese sind im in Figur 3 dargestellten Fall eines Taktsignalgenerators TSG mit analogem Eingang mit einem Digital-Analog-Wandler D/A verbunden, dessen analoges Ausgangssignal den Steuereingang des Taktsignalgenerators TSG ansteuert.

Es ist prinzipiell auch möglich, einem herkömmlichen Taktsignalgenerator einen steuerbaren Frequenzteiler nachzuschalten, der vom Zufallszahlengenerator ZZG angesteuert wird. Auch auf diese Weise ließe sich ein internes Taktsignal Clᵢₙₜ erzeugen, das eine zeitlich schwankende Frequenz- bzw. Periodendauer aufweist. Ein solches Ausführungsbeispiel ist in Figur 4 innerhalb einer strichlierten Linie dargestellt. Das in diesem Fall zu verwendende Taktsignal Cl' ist durch einen ebenfalls strichlierten Pfeil angedeutet.

Die Figur 4 zeigt darüber hinaus eine Ergänzung des mit einem ansteuerbaren Teiler T ausgebildeten Taktsignalgenerators zu einer Phasenregelschleife. Hierzu ist das Ausgangssignal des Tellers T ebenso wie das externe Taktsignal Clₑₓₜ einem Phasendetektor zugeführt, dessen Ausgangssignal über ein Tiefpaßfilter TPF dem Steuereingang des steuerbaren Oszillator VCO zugeführt ist. In diesem Fall liefert das Ausgangssignal des steuerbaren Oszillators VCO das nach Maßgabe des Zufallszahlengenerators ZZG schwankende interne Taktsignal Clᵢₙₜ.

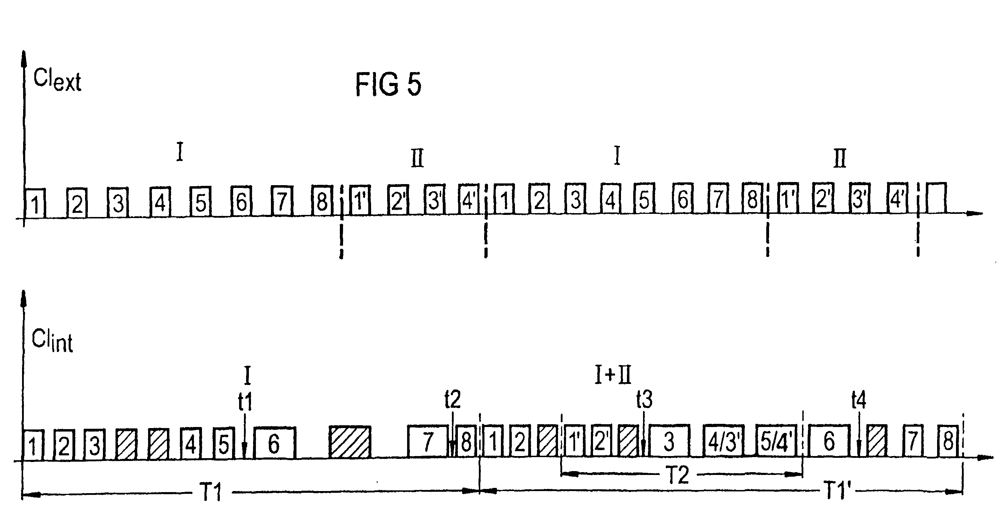

In Figur 5 sind die unterschiedlichen Zeitdauern zweier Vorgänge I und II bei einem herkömmlichen externen Taktsignal Clₑₓₜ sowie bei einem erfindungsgemäßen internen Taktsignal Clᵢₙₜ dargestellt. Das im oberen Teil der Figur 5 dargestellte externe Taktsignal Clₑₓₜ weist eine konstante Frequenz auf. Ein erster Vorgang I soll acht Perioden dauern und ein zweiter Vorgang II vier Perioden. Wie aus dem oberen Teil der Figur 5 deutlich zu erkennen ist, würde ein erster Vorgang I immer dieselbe Zeit dauern, ebenso wie ein zweiter Vorgang II. Ein Angreifer, der beispielsweise aus der Stromaufnahme ermittelt, wann Vorgänge in der Halbleiterschaltung ablaufen könnte bei wiederkehrenden Zeitperioden bestimmter Dauer darauf schließen, daß es sich um einen schon einmal vorgekommenen Vorgang handelt.

Im Gegensatz dazu ist im unteren Teil der Figur 5 ein internes Taktsignal Clᵢₙₜ mit statistisch schwankender Frequenz dargestellt. So ändert sich dort die Periodendauer zu Zeitpunkten t1, t2, t3 und t4. Außerdem sind durch schraffiert dargestellte Perioden des Taktsignals Clᵢₙₜ Umschaltungen auf eine Hilfsschaltungseinheit, also quasi das Einfügen von Dummy-Takten gezeigt. Die einzelnen Taktperioden des Vorgangs I sind mit Ziffern 1 bis 8 gekennzeichnet. Wie zu sehen ist, hat der Vorgang I zuerst eine Dauer T1, wobei während dieser Dauer T1 zu Zeitpunkten t1 und t2 die Frequenz des Taktsignals Clᵢₙₜ umgeschaltet wurde und drei Dummy-Perioden eingefügt wurden. Die Dauer T1 hat somit keinen Bezug zur wirklichen Dauer des Vorgangs I.

Anschließend an den ersten Vorgang I beginnt ein zweiter Vorgang I, dessen Taktperioden ebenfalls mit Ziffern 1 bis 8 gekennzeichnet sind. Hier wird nach der zweiten Taktperiode ein Dummy-Takt eingeführt, und anschließend wird auf eine andere Schaltungseinheit umgeschaltet, in der der Vorgang II abläuft. Dessen Taktperioden sind mit Ziffern 1' bis 4' gekennzeichnet. Nachdem zwei Taktperioden des Vorgangs II abgelaufen sind, wird ebenfalls ein Dummy-Takt eingefügt. Anschließend wird zu einem Zeitpunkt t3 einerseits die Frequenz umgeschaltet und andererseits wieder zu Vorgang I umgeschaltet. Bei den nächsten zwei Taktperioden laufen dann die Vorgängen I und II parallel. Der Vorgang II ist dann nach einer Dauer T2 beendet, während der zweite Vorgang I weiterläuft und erst nach einer Dauer T1' beendet ist.

Die Vorgänge I und II benötigen nach wie vor acht bzw. vier Periodendauern des Taktsignals. Dadurch ergeben sich Gesamtdauern für die jeweiligen ersten Vorgänge I von T1 und T1' und für den zweiten Vorgänge II von T2. Wie aus dem unteren Teil der Figur 5 zu erkennen ist, haben die Dauern T1 und T1' unterschiedliche Dauern, während der Vorgang II überhaupt nicht als Einzelvorgang hervortritt, so daß ein Angreifer nicht erkennen kann, um welche Vorgänge es sich handelt.

Durch die erfindungsgemäße integrierte Halbleiterschaltung kann somit auf sehr einfache, aber wirkungsvolle Weise verhindert werden, daß durch Ermitteln der Dauern für bestimmte Vorgänge auf deren Inhalt geschlossen werden kann.

## Patentansprüche

1. Integrierte Halbleiterschaltung mit einer Anzahl von durch ein Taktsignal (Clᵢₙₜ) angesteuerten, sowohl parallel als auch seriell betreibbaren Schaltungseinheiten (S1, S2, S3, HS),
**dadurch gekennzeichnet,**
**daß** ein das Taktsignal (Clᵢₙₜ) bereitstellender Anschluß über jeweils ein steuerbares Schaltmittel (MP1, MP2, MP3, MP4) mit dem Takteingang der jeweiligen Schaltungseinheiten (S1, S2, S3, HS) verbunden ist und
**daß** die Steuereingänge der Schaltmittel (MP1, MP2, MP3, MP4) mit einem Ausgang eines Zufallsignalgenerators (ZSG) verbunden sind,
so daß der Betrieb einer Schaltungseinheit (S1, S2, S3, HS) parallel oder seriell zu einer oder mehreren der anderen Schaltungseinheiten (S1, S2, S3, HS) nach Maßgabe des Zufallsignals erfolgt.

2. Integrierte Halbleiterschaltung nach Anspruch 1, **dadurch gekennzeichnet, daß** der das Taktsignal (Clᵢₙₜ) bereitstellende Anschluß der Ausgang eines steuerbaren Taktsignalgenerators (TSG1, TSG2, TSG3; TSG) ist, dessen Steuereingang mit dem Ausgang eines Zufallsignalgenerators (ZSG) verbunden ist, so daß der Zeitpunkt einer Schaltflanke des Taktsignals (Clᵢₙₜ) nach Maßgabe des Zufallsignals variiert.

3. Integrierte Halbleiterschaltung nach einem der Ansprüche 1 oder 2, **dadurch gekennzeichnet, daß** zumindest zwei jeweils ein Taktsignal bereitstellende Anschlüsse vorgesehen sind, so daß eine erste Anzahl von Schaltungseinheiten (S1) mit einem ersten Taktsignal und eine zweite Anzahl von Schaltungseinheiten (S2) mit einem zweiten Taktsignal und gegebenenfalls weitere Anzahleh von Schaltungseinheiten (S3) mit weiteren Taktsignalen betreibbar sind.

4. Integrierte Halbleiterschaltung nach Anspruch 3, **dadurch gekennzeichnet, daß** die Schaltmittel als (MP1, MP2, MP3, MP4) ausgebildet sind, denen jeweils alle Taktsignale zugeführt. sind und nach Maßgabe des Zufallsignals eines der Taktsignale zur jeweiligen Schaltungseinheit durchschaltbar ist.

5. Integrierte Halbleiterschaltung nach einem der vorhergehenden Ansprüche, **dadurch gekennzeichnet, daß** zumindest einer der Taktsignalgeneratoren (TSG1, TSG2, TSG3; TSG) mit einem spannungsgesteuerten Oszillator (OSZ) gebildet ist.

6. Integrierte Halbleiterschaltung nach einem der vorhergehenden Ansprüche, **dadurch gekennzeichnet, daß** zumindest einer der Taktsignalgeneratoren (TSG1, TSG2, TSG3; TSG) mit einer Phasenregelschleife mit durch den Zufallssignalgenerator (ZZG) ansteuerbarem Frequenzteiler (T) gebildet ist.

7. Integrierte Halbleiterschaltung nach einem der vorhergehenden Ansprüche, **dadurch gekennzeichnet, daß** zumindest eine der Schaltungseinheiten eine Hilfsschaltungseinheit (HS) ist.

8. Verfahren zum Betreiben einer getakteten integrierten Halbleiterschaltung,
**dadurch gekennzeichnet,**
**daß** vor und/oder während und/oder nach in Schaltungseinheiten (S1, S2, S3) der integrierten Halbleiterschaltung ablaufenden, jeweils eine definierte Anzahl von Taktsignalperioden benötigenden Vorgängen, eine weitere, durch ein Zufallsignal bestimmte Anzahl von Taktsignalperioden einer Hilfsschaltungseinheit (HS) mit etwa gleichem Stromverbrauch wie die Schaltungseinheiten (S1, S2, S3) zugeführt wird.

9. Verfahren zum Betreiben einer getakteten integrierten Halbleiterschaltung,
**dadurch gekennzeichnet,**
**daß** während einem in einer ersten Schaltungseinheit (S1) der integrierten Halbleiterschaltung ablaufenden, eine definierte Anzahl von Taktsignalperioden benötigenden Vorgang für die Dauer von durch ein Zufallsignal bestimmten Zeitperioden zumindest eine weitere Schaltungseinheit (S2) durch Zuführung desselben oder eines anderen Taktsignals in Betrieb genommen wird.

10. Verfahren nach Anspruch 9, **dadurch gekennzeichnet, daß** während zumindest einer der durch das Zufallsignal bestimmten Zeitperioden der in der ersten Schaltungseinheit (S1) ablaufende Vorgang unterbrochen wird.

## Claims

1. Integrated semiconductor circuit having a number of circuit units (S1, S2, S3, HS) which are driven by a clock signal (Clᵢₙₜ) and can be operated both in parallel and serially,
**characterized**
**in that** a connection supplying the clock signal (Clᵢₙₜ) is connected to the clock input of the respective circuit units (S1, S2, S3, HS) via a respective controllable switching means (MP1, MP2, MP3, MP4), and
**in that** the control inputs of the switching means (MP1, MP2, MP3, MP4) are connected to an output of a random signal generator (ZSG),
so that a circuit unit (S1, S2, S3, HS) is operated in parallel or serially with one or more of the other circuit units (S1, S2, S3, HS) on the basis of the random signal.

2. Integrated semiconductor circuit according to Claim 1, **characterized in that** the connection supplying the clock signal (Clᵢₙₜ) is the output of a controllable clock signal generator (TSGI, TSG2, TSG3; TSG) whose control input is connected to the output of a random signal generator (ZSG), so that the instant of a switching edge of the clock signal (Clᵢₙₜ) varies on the basis of the random signal.

3. Integrated semiconductor circuit according to either of Claims 1 and 2, **characterized in that** at least two connections each supplying a clock signal are provided, so that a first number of circuit units (S1) can be operated with a first clock signal and a second number of circuit units (S2) can be operated with a second clock signal, and possibly further numbers of circuit units (S3) can be operated with further clock signals.

4. Integrated semiconductor circuit according to Claim 3, **characterized in that** the switching means are in the form of multiplexers (MP1, MP2, MP3, MP4) which are each supplied with all the clock signals, and one of the clock signals can be switched through to the respective circuit unit on the basis of the random signal.

5. Integrated semiconductor circuit according to one of the preceding claims, **characterized in that** at least one of the clock signal generators (TSGI, TSG2, TSG3; TSG) is formed by means of a voltage-controlled oscillator (OSZ).

6. Integrated semiconductor circuit according to one of the preceding claims, **characterized in that** at least one of the clock signal generators (TSGI, TSG2, TSG3; TSG) is formed by means of a phase-locked loop with a frequency divider (T) which can be driven by the random signal generator (ZZG).

7. Integrated semiconductor circuit according to one of the preceding claims, **characterized in that** at least one of the circuit units is an auxiliary circuit unit (HS).

8. Method for operating a clocked integrated semiconductor circuit,
**characterized**
**in that**, before and/or during and/or after operations which take place in circuit units (S1, S2, S3) of the integrated semiconductor circuit and each require a defined number of clock signal periods, a further number of clock signal periods, which is determined by a random signal, is supplied to an auxiliary circuit unit (HS) with approximately the same current consumption as the circuit units (S1, S2, S3).

9. Method for operating a clocked integrated semiconductor circuit,
**characterized**
**in that**, during an operation which takes place in a first circuit unit (S1) of the integrated semiconductor circuit and requires a defined number of clock signal periods, at least one other circuit unit (S2) is started for the duration of time periods determined by a random signal by supplying the same or another clock signal.

10. Method according to Claim 9, **characterized in that**, during at least one of the time periods determined by the random signal, the operation taking place in the first circuit unit (S1) is interrupted.

## Revendications

1. Circuit intégré à semiconducteur ayant un certain nombre d'unités (S1, S2, S3, HS) de circuit, commandé par un signal (Clᵢₙₜ) d'horloge et pouvant fonctionner tant en parallèle qu'en série, **caractérisé**
**en ce qu'**une borne mettant à disposition le signal (Clᵢₙₜ) d'horloge est reliée par respectivement un moyen (MP1, MP2, MP3, MP4) de commutation qui peut être commandé à l'entrée d'horloge des unités (S1, S2, S3, HS) respectives de circuit, et
**en ce que** les entrées de commande du moyen (MP1, MP2, MP3, MP4) de commutation sont reliées à une sortie d'un générateur (ZSG) de signal aléatoire,
de sorte que le fonctionnement dune unité (S1, S2, S3, HS) de circuit s'effectue en parallèle ou en série à Tune ou à plusieurs des autres unités (S1, S2, S3, HS) de commutation en fonction du signal aléatoire.

2. Circuit intégré à semiconducteur suivant la revendication 1, **caractérisé en ce que** la borne mettant à disposition le signal (Clᵢₙₜ) d'horloge est la sortie d'un générateur (TSG1, TSG2, TSG3, TSG) de signal d'horloge, qui peut être commandé et dont l'entrée de commande est reliée à la sortie d'un générateur (ZSG) de signal aléatoire, de sorte que l'instant d'un front de commutation du signal (Clᵢₙₜ) d'horloge varie en fonction du signal aléatoire.

3. Circuit intégré suivant Tune des revendications 1 ou 2, **caractérisé en ce qu'**il est prévu au moins deux bornes mettant respectivement à disposition un signal d'horloge, de sorte qu'un premier nombre d'unités (S1) de circuit peuvent fonctionner avec un premier signal d'horloge et un deuxième nombre d'unités (S2) de circuit peuvent fonctionner avec un deuxième signal d'horloge et que le cas échéant des nombres supplémentaires d'unités (S3) de circuit peuvent fonctionner avec d'autres signaux d'horloge.

4. Circuit intégré suivant la revendication 3, **caractérisé en ce que** les moyens de commutation sont constitués sous la forme de multiplexeurs (MP1, MP2, MP3, MP4) auxquels sont envoyés respectivement tous les signaux d'horloge et en fonction du signal aléatoire l'un des signaux d'horloge peut passer à l'unité de commutation respective.

5. Circuit intégré suivant Tune des revendications précédentes, **caractérisé en ce qu'**au moins l'un des générateurs (TSG1, TSG2, TSG3, TSG) de signal d'horloge est formé d'un oscillateur (OSZ) commandé en tension.

6. Circuit intégré suivant Tune des revendications précédentes, **caractérisé en ce qu'**au moins l'un des générateurs (TSG1, TSG2, TSG3, TSG) de signal d'horloge est formé par une boucle à régulation de phase ayant un diviseur (T) de fréquence pouvant être commandé par le générateur (ZZG) de signal aléatoire.

7. Circuit intégré suivant Tune des revendications précédentes, **caractérisé en ce qu'**au moins Tune des unités de circuit est une unité (HS) de circuit auxiliaire.

8. Procédé pour faire fonctionner un circuit intégré à semiconducteur à horloge, **caractérisé en ce que** avant et/ou pendant et/ou après respectivement un nombre d'opérations se déroulant dans des unités (S1, S2, S3) de circuit du circuit intégré à semiconducteur et nécessitant respectivement un nombre défini de périodes de signal d'horloge, il est envoyé un autre nombre déterminé par le signal aléatoire de période de signal d'horloge à une unité (HS) auxiliaire de circuit ayant à peu près la même consommation de courant que les unités (S1, S2, S3) de circuit.

9. Procédé pour faire fonctionner un circuit intégré à semiconducteur et à horloge, **caractérisé en ce que** pendant une opération se déroulant dans une première unité (S1) de circuit du circuit intégré à semiconducteur et nécessitant un nombre défini de périodes de signal d'horloge, il est mis en fonctionnement pour la durée des périodes de temps déterminées par un signal aléatoire au moins une unité (S2) supplémentaire de circuit par envoi de ce signal ou d'un autre signal d'horloge.

10. Procédé suivant la revendication 9, **caractérisé en ce que** pendant au moins Tune des périodes de temps définies par le signal aléatoire, l'opération se déroulant dans la première unité (S1) du circuit est interrompue.
